(19) Europäisches Patentamt / European Patent Office / Office européen des brevets

(11) **EP 1 914 525 B1**

(12) **EUROPEAN PATENT SPECIFICATION**

(45) Date of publication and mention
of the grant of the patent:
**02.01.2019 Bulletin 2019/01**

(51) Int Cl.:
***G01D 5/36*** *(2006.01)*

(21) Application number: **06380264.9**

(22) Date of filing: **10.10.2006**

(54) **Configurable optoelectronic device**

Konfigurierbare optoelektronische Einheit

Composant optoélectronique configurable

(84) Designated Contracting States:
**DE ES**

(43) Date of publication of application:
**23.04.2008 Bulletin 2008/17**

(73) Proprietor: **FAGOR, S.COOP.**
**20500 Mondragon (Gipuzkoa) (ES)**

(72) Inventors:
• **Urra Chandia, Juan Carlos**
**20500 Mondragon (Gipuzkoa) (ES)**
• **De La Fuente Prado, Pablo**
**48004 Bilbao (Bizkaia) (ES)**
• **Morlanes Calvo, Tomàs**
**01011 Vitoria-Gasteiz (Araba) (ES)**

(74) Representative: **Igartua, Ismael et al**
**Galbaian S. Coop.**
**Garaia Parke Teknologikoa**
**Goiru Kalea 1**
**20500 Arrasate-Mondragón (ES)**

(56) References cited:
**EP-A- 1 308 700     US-B1- 6 765 195**

• **SEITZ P ET AL: "SMART OPTICAL AND IMAGE SENSORS FABRICATED WITH INDUSTRIAL CMOS/CCD SEMICONDUCTOR PROCESSES" PROCEEDINGS OF THE SPIE, SPIE, BELLINGHAM, VA, US, vol. 1900, 1993, pages 21-30, XP000904996 ISSN: 0277-786X**
• **SPIRIG T ET AL: "Real-time 2D feature detection with low-level image processing algorithms on smart CCD/CMOS image sensors" PROCEEDINGS. INTERNATIONAL CONFERENCE ON IMAGE PROCESSING (CAT. NO.96CH35919) IEEE NEW YORK, NY, USA, vol. 2, 1996, pages 1043-1046 vol., XP002417780 ISBN: 0-7803-3259-8**
• **DATABASE INSPEC [Online] THE INSTITUTION OF ELECTRICAL ENGINEERS, STEVENAGE, GB; 1992, FORCHHEIMER R ET AL: "MAPP2200-a second generation smart optical sensor", Database accession no. 4184551**
• **DATABASE INSPEC [Online] THE INSTITUTION OF ELECTRICAL ENGINEERS, STEVENAGE, GB; May 1997 (1997-05), SPIRIG T ET AL: "A smart CCD image sensor with real-time programmable parallel convolution capabilities", Database accession no. 5582315**
• **ELOUARDI A ET AL: "A smart sensor-based vision system: implementation and evaluation; A smart sensor-based vision system", JOURNAL OF PHYSICS D: APPLIED PHYSICS, INSTITUTE OF PHYSICS PUBLISHING LTD, GB, vol. 39, no. 8, 21 April 2006 (2006-04-21) , pages 1694-1705, XP020095186, ISSN: 0022-3727, DOI: 10.1088/0022-3727/39/8/033**

**Description**

TECHNICAL FIELD

The present invention relates to systems comprising two elements moveable with respect to each other and a configurable optoelectronic device used to determine the relative position between said two elements.

PRIOR ART

Optoelectronic devices can determine the relative position between two elements that can be moved in relation to each other are known.

One of the elements comprises at least one light emitter and a plurality of photodetectors, said photodetectors receiving at least part of the light emitted by said light emitter and generating electrical signals according to said received light. Thus, each photodetector generates an electrical signal according to the light it receives, output signals being obtained in the device according to said electrical signals, and at least some of said output signals being used to determine the relative position between the two elements. To obtain greater quality of said output signals or to obtain output signals with specific characteristics, devices of this type that comprise a specific geometric arrangement or configuration of photodetectors adapted for such purpose are known.

EP 250711 B1, for example, discloses a device that comprises a specific geometric arrangement of photodetectors, with a plurality of photodetectors that are dimensioned and disposed between each other at distances conveniently selected for a period of the light fringes detected, for the purpose of eliminating a series of specific harmonics in the output signals. If there is a different period of said light fringes, in order to eliminate said harmonics, a different geometric arrangement of said photodetector would be required, the elimination of harmonics (or the characteristics of the output signals) being limited to the specific geometric arrangement of said photodetectors comprised in the device.

The document EP 1164359 B1 discloses an optoelectronic device for determining the relative position between two elements. Said device comprises a light emitter and a plurality of photodetectors that are disposed with a specific geometric arrangement or configuration, and which receive at least part of the light emitted by said light emitter. Each photodetector generates an electrical signal according to the light it receives, its shape and its size, and said photodetectors are connected electrically, thereby generating output signals without upper harmonics from said electrical signals. The shape, the size and the distance from each other of the photodetectors (the arrangement) are adapted for the elimination of the upper harmonics in said output signals. To obtain output signals with different characteristics (e.g. the elimination of different harmonics) it would be necessary to have another geometric arrangement of photodetectors and/or different electrical connections, or it would be necessary to have another device with said other geometric arrangement of photodetectors and/or said other electrical connections, given that it would not be possible to obtain said output signals with the same specific geometric arrangement and/or with the same electrical connection, the characteristics of said output signals being limited to the specific geometric arrangement of said photodetectors comprised in the device.

The document EP 1147376 B1 also discloses an optoelectronic device for determining the relative position between two elements. In said device, the photodetectors extend along a direction of movement and comprise substantially the same dimensions. Each of said photodetectors is connected to at least one capacitor, being associated to each of them a factor of gain according to the capacity of the corresponding capacitor. Said factors of gain are predetermined and vary periodically along the direction of movement, output signals thus being obtained with characteristics corresponding to said periodic variation and to said predetermined factors of gain.

EP1308700A2 discloses a method for controlling the resolution of an optical encoder for providing position information of an object which moves along a certain measuring direction where the optical encoder includes a light source that emits light and a data track that moves relative to the light source.

DISCLOSURE OF THE INVENTION

It is an object of the invention to provide a system comprising two elements moveable with respect to each other and a configurable optoelectronic measuring device that can generate output signals whose characteristics can be modified, at least some of said output signals being able to correspond to signals used to determine the relative position between said two elements moveable between each other.

The configurable optoelectronic device can generate a plurality of output signals, with at least some of said output signals having the capacity to be used to determine the relative position between two elements moveable between each other. One of said elements comprises at least one light emitter that can emit a beam of light that passes through or is reflected on the other element, and at least one arrangement of photodetectors, said photodetectors receiving the light that passes through or is reflected on said other element, each photodetector generating an electrical signal according to the light it receives. Said device comprises control means that receive said electrical signals and generate the required output signals in accordance with said received electrical signals.

The control means are adapted in order to configure the relationship between said electrical signals, having the capacity to generate different dependent functions of said electrical signals in accordance with the configured combinations, and also having the capacity to connect any of said functions to any of the output signals.

In this way, output signals with different characteristics can be generated with a single geometric arrangement of photodetectors, according to the relationship between configured electrical signals and the function connected to each output signal. For this purpose, the functions are generated corresponding to the required characteristics of said output signals and the relationship between said electrical signals are configured according to the characteristics required for the corresponding output signals, by means of the control means.

The control means can also associate at least one gain to each of the electrical signals generated by the photodetectors, the output signals depending in accordance with said electrical signals and the corresponding associated gains.

Thus, with a single function, depending on the value assigned to each gain, different geometric arrangements of photodetectors can be simulated with a single geometric arrangement of photodetectors.

These and other advantages and characteristics of the invention will be made evident in the light of the accompanying drawings and the detailed disclosure thereof.

DESCRIPTION OF THE DRAWINGS

Fig. 1 shows an embodiment of the system of the invention.

Fig. 2 shows the control means of a configurable electronic device of the system of Fig. 1.

Fig. 3 shows an association of gains to the output signals, of the device of the system of Fig. 1.

Fig. 4 shows a geometric arrangement of the photodetectors of the device of the system of Fig. 1, and some simulated photodetectors.

Fig. 5 shows the union, by welding, of the photodetectors and the control means of the device of the system of Fig. 1.

DETAILED DISCLOSURE OF THE INVENTION

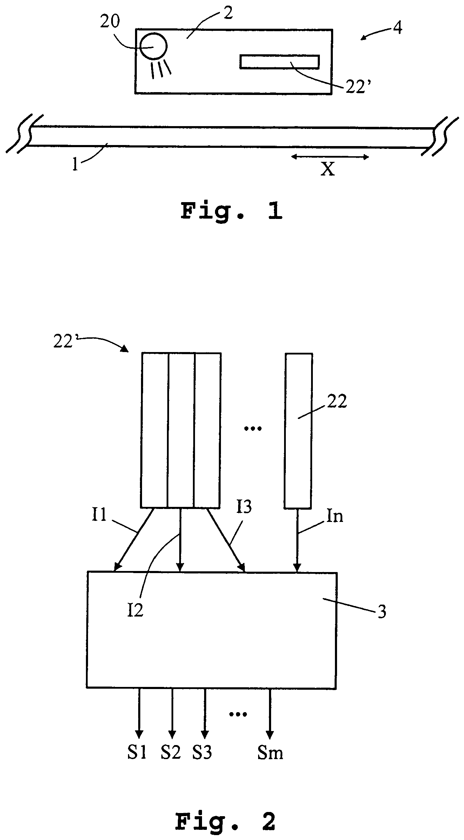

The system of the invention comprises a configurable optoelectronic device 4 that can generate a plurality of output signals S1, S2, ... Sm, at least some of said output signals S1, S2, ... Sm generally being used to determine the relative position between two elements 1, 2 moveable between each other of the system. In a preferred embodiment shown in Figure 1, the movement between said elements 1 and 2 is linear although it can also be rotary, one of the elements 1, 2 corresponding to a graduated scale 1 and the other element 1, 2 corresponding to a readhead 2. The graduated scale 1 comprises a plurality of marks (not shown in the figures) distributed periodically, and is fixed to a static support (not shown in the figures), such as the bed of a machine. The readhead 2 is moved in relation to said graduated scale 1 in a direction of movement X parallel to said graduated scale 1, the device 4 having the capacity to determine the relative position between said readhead 2 and said graduated scale 1. In said preferred embodiment, said readhead 2 comprises a light emitter 20 that emits a beam of light towards said graduated scale 1, and an arrangement 22' of photodetectors 22 that receive the light that passes through or is reflected on said graduated scale 1, although it may also comprise more than one arrangement 22' of photodetectors 22. The graduated scale 1 can be substantially opaque and the marks can be substantially transparent, the photodetectors 22 of the readhead 2 receiving the light that passes through said graduated scale 1. Similarly, said graduated scale 1 can be substantially transparent with said marks being substantially opaque, said photodetectors 22 receiving the light that is reflected on said marks.

Each photodetector 22 converts the light it receives into an electrical signal I1, ..., In, and the device 4 comprises control means 3, shown in Figure 2, that receive said electrical signals I1, ..., In. Said control means 3 generate output signals S1, S2, ... Sm according to said received electrical signals I1, ..., In, and are adapted to configure the relationship between said electrical signals I1, I2, ..., In, having the capacity to generate different dependent functions of said electrical signals I1, I2, ..., In, and also having the capacity to associate any of said generated functions to the output signal S1, S2, ..., Sm. In this way, output signals S1, S2, ..., Sm of the following type are obtained:

$$S_j = f_j(I1, I2, ..., In)$$

Where: j = 1, 2, ..., m

Thus, depending on the functions generated, output signals S1, S2, ..., Sm with different characteristics (such as the elimination of specific harmonics) can be generated, and even output signals corresponding to different applications can be generated too. Preferably, said output signals S1, S2, ... Sm are used to determine the relative position between the graduated scale 1 and the readhead 2, said output signals S1, S2, ... Sm corresponding to counting signals A and B and reference signal 10, for example, said output signals S1, S2, ..., Sm being associated to functions corresponding to said application, functions generated from a specific configuration of the relationship between the electrical signals I1, 12, ..., In. Said counting signals A and B are preferably substantially sinusoidal (although they can also be in quadrature) and are substantially phase shifted 90° from one another, and the reference signal 10 can comprise, for example, the shape of a pulse. A point of reference is obtained by means of said reference signal 10, the relative movement between said graduated scale 1 and the readhead 2 being detected by means of said counting signals A and B, in relation to said point of reference, the relative position between said graduated scale 1 and said readhead 2 thus being determined.

The output signals S1, S2, ..., Sm may also be used for other applications such as for evaluating the intensity of the light received by the photodetectors 22, any fault in the light emitter or in any of the photodetectors being detected, or for any other type of application applicable to the device 4. In addition, a single device 4 can generate output signals S1, S2, ..., Sm corresponding to different applications, such as the generation of output signals S1, S2 and S3 that correspond with the counting signals A and B and the reference signal 10 used to determine the relative position between the objects 1 and 2, and an output signal S4 that corresponds with a testing signal for evaluating the luminosity of the light received and controlling in this way the correct functioning. Normally, the output signals S1, S2, ... Sm correspond directly with the signals necessary for the application required by a user (e.g. the counting signals A and B), but said necessary signals may also be generated from a combination of said output signals S1, S2, ..., Sm.

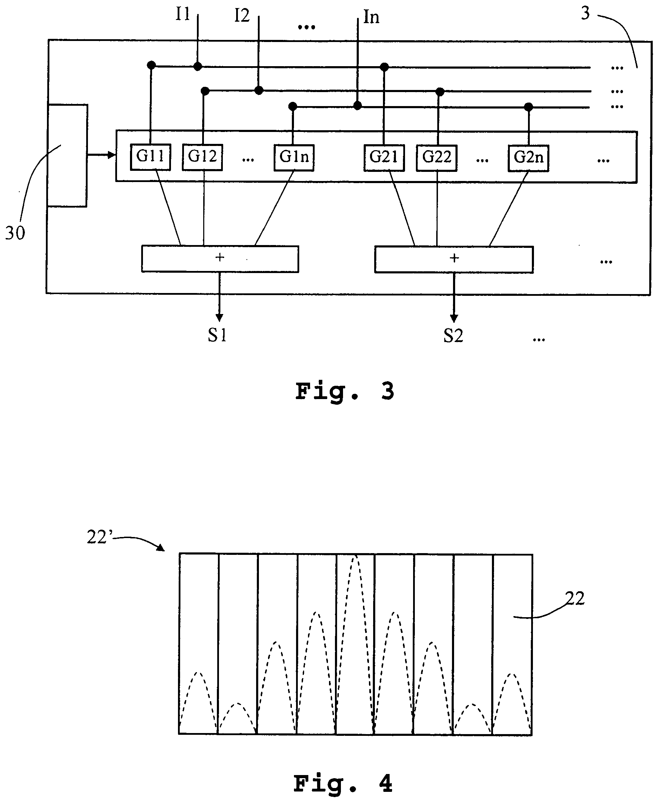

The control means 3 can, additionally, assign a gain G11, ..., Gmn to each of the electrical signals I1, 12, ..., In, as shown in Figure 3. With this assignment, the dimension of each photodetector 22 can be simulated, irrespective of the geometric dimension it comprises. By way of example, Figure 4 shows with continuous lines a possible geometric arrangement 22' of the photodetectors 22, the simulated photodetectors 22 being shown with broken lines.

By also configuring the relationship between the electrical signals I1, ..., In generated by the photodetectors 22, different arrangements of said photodetectors 22 can be simulated in spite of comprising a specific geometric arrangement 22', both the assignment of the gains G11, ..., Gmn and the configuration of the relationship between said electrical signals 12, ..., In being effected with one-dimensional or two-dimensional geometric arrangements 22'. In this way, a single design of the device 4 can be used for different applications or for creating output signals S1, S2, ..., Sm of different characteristics, thereby facilitating the manufacturing process as there is no need to design and/or manufacture devices 4 with geometric arrangements 22' of different photodetectors 22 according to the application or the required characteristics.

If, for example, a series of specific harmonics need to be eliminated in the output signals S1, S2, ..., Sn generated, a specific value is assigned to each gain G11, ..., Gmn associated to said electrical signals I1, 12, ..., In in order to simulate specific dimensions of the photodetectors 22, and a specific relationship is configured between said electrical signals I1, 12, ..., In in order to simulate the arrangement 22' of the photodetectors 22 to enable this. If output signals S1, S2, ..., Sn of different characteristics need to be obtained, different values are assigned to said gains G11, ..., Gmn and a different relationship is configured between said electrical signals I1, 12, ..., In.

Preferably, the relationship between said electrical signals I1, 12, ..., In is linear, output signals S1, ..., Sm of the following type being obtained:

```
S1 = G11*I1 + G12*I2 + G13*I3 + ... G1n*In

S2 = G21*I1 + G22*I2 + G23*I3 + ... G2n*In

                    . . .

Sm = Gm1*I1 + Gm2*I2 + Gm3*I3 + ... Gmn*In,
```

Where:

I1, ..., In = electrical signals.
S1, ..., Sm = output signals.
G11, ..., Gmn = gains associated to the corresponding electrical signal I1, ..., In.

Thus, with this specific linear relationship, it is sufficient to assign different values to the gains G11, ..., Gmn in order to obtain output signals S1, ..., Sm with different characteristics.

The values of the gains G11, ..., Gmn are programmable, and said values can be programmed as many times as necessary. Said programming can be carried out, for example, both during the manufacture of said device 4 or just with said device 4 installed in an user's machine (not shown in the figures), and is executed from an external device (not shown in the figures) such as a PC that is connected to the device 4 by a communication protocol, the control means 3 comprising for this purpose a communication interface 30. In this way, with the device 4 already installed in a user's machine, the values of said gains G11, ...., Gmn can be programmed, and, for example, said values can be adjusted (with different values being programmed) until the output signals S1, S2, ... S3 with the required characteristics are obtained. As the gains G11, ..., Gmn are programmable and different arrangements 22' of photodetectors 22 can be simulated irrespective of the geometric arrangement 22' of said photodetectors 22, said photodetectors 22 preferably comprise a substantially equal size and a substantially equal shape, thereby facilitating their manufacture.

As gains G11, ..., Gmn can be associated to the electrical signals I1, ..., In, a device 4 that is more immune to the dirt that may deposit itself on the photodetectors 22 can be obtained. If, for example, a gain G11 with a value of less than 1 is associated to an electrical signal I1, the configuration or arrangement of the simulated photodetector 22 would be of a smaller size than the geometric arrangement of said photodetector 22. Said simulated arrangement would be more immune to dirt than a geometric arrangement equal to simulated arrangement, given that said dirt would interfere with the electrical signal I1 generated from the geometric arrangement in both cases in a manner proportional to the area of the photodetector 22 covered by said dirt. The simulation of a smaller area of photodetector 22 through a larger area of photodetector 22 with a smaller gain allows for the proportion of area covered by dirt to be made smaller, the corresponding electrical signal In being influenced less by said dirt.

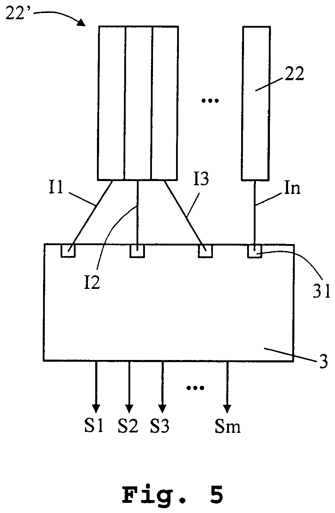

The photodetectors 22 and the control means 3 can be independent, as shown in Figure 5, a welding 31 being required to connect each photodetector 22 to said control means 3, which may in this case comprise a microcontroller or a programmable logic device (PLD), for example, although preferably said photodetectors 22 and said control means 3 are integrated into a single semiconductor substrate (not shown in the figures). As it is disposed in a single semiconductor substrate, a physical union 31 (e.g. by welding) between each photodetector 22 and said control means 3 is not required, thereby preventing the risk of manufacturing faults such as those caused by cold connections or short circuits. Furthermore, the fact of having to make a physical union for each photodetector 22 involves limiting the distance between said photodetectors 22 in order to make said connection possible, thereby eliminating or reducing this limitation as said photodetectors 22 and said control means 3 are disposed in a single semiconductor substrate, said photodetectors 22 being disposed at a shorter distance from one to another.

## Claims

1. System comprising a configurable optoelectronic device and two elements (1,2) moveable with respect to each other, said elements (1, 2) being a graduated scale (1) and a readhead (2), and the movement between both elements (1, 2) being linear or rotary,
the device (4) being configured for generating a plurality of output signals (S1, S2,...,Sm), and for using at least some of said output signals (S1, S2,...,Sm) to determine the relative position between said two elements (1,2) moveable between each other,
the readhead (2) comprising

   - at least one light emitter (20) configured to emit a beam of light that passes through or is reflected on the graduated scale (1), and
   - at least one specific geometric arrangement (22') of photodetectors (22), said photodetectors (22) being configured for receiving the light that passes through or is reflected on said graduated scale (1),

   the graduated scale (1) comprising a plurality of marks distributed periodically and being fixed to a static support, and each photodetector (22) being configured for converting the light it receives into an electrical signal (I1, ..., In),
   said device (4) comprising control means (3) that are configured

   - for receiving said electrical signals (I1,I2,...,In) and
   - for generating the output signals (S1, S2,...,Sm) according to said electrical signals (I1,I2,...,In),

said output signals (S1,S2,...,Sm) comprising a reference signal (10) by means of which a reference point is obtained, and a first counting signal (A) and a second counting signal (B) substantially phase shifted 90° from one another, the relative movement between the two elements (1, 2) being detected by means of said counting signals (A, B), in relation to said point of reference, the relative position between said two elements (1, 2) thus being determined, **characterised in that**

said control means (3) are adapted to configure the relationship between said electrical signals (I1,I2,...,In), having the capacity to generate different functions dependent on said electrical signals (I1,I2,...,In),

said control means (3) also having the capacity to associate any of said functions to any of the output signals (S1,S2,...,Sm) so that, depending on the functions generated, output signals (S1,S2,...,Sm) with different characteristics can be generated, and

said control means (3) being adapted for using each one of said electrical signals (I1,I2,...,In) to generate several output signals (S1,S2,...,Sm), output signals (S1, S2, S3) according to the equation $S_j=f_j(I1, I2, ..., In)$ being obtained, where j = 1, 2, ..., m.

2. System according to claim 1, wherein the control means (3) are configured to associating a gain (G11, ..., Gmn) to each of the electrical signals (I1, I2, ..., In) it receives, different dimensions of the photodetectors (22) being simulated in accordance with the value of said gains (G11, ..., Gmn), and different arrangements (22') of said photodetectors (22) being able to be simulated in accordance with the value of said gains (G11, ..., Gmn) and the configured combination between the electrical signals (I1,I2,...,In).

3. System according to claim 2, wherein the values of the gains (G11, ..., Gmn) are programmable.

4. System according to any of claims 1 to 3, wherein the functions generated by the control means (3) are linear functions.

5. System according to any of claims 1 to 4, wherein the photodetectors (22) and the control means (3) are integrated into a single semiconductor substrate.

6. System according to any of claims 1 to 5, wherein the arrangement (22') of the photodetectors (22) is one-dimensional.

7. System according to any of claims 1 to 5, wherein the arrangement (22') of the photodetectors (22) is two-dimensional.

8. System according to any of claims 1 to 7, wherein all the photodetectors (22) comprise a substantially equal size and a substantially equal shape.

**Patentansprüche**

1. System umfassend eine konfigurierbare optoelektronische Vorrichtung und zwei relativ zueinander bewegliche Elemente (1, 2), wobei die Elemente (1, 2) eine Teilstrichskala (1) und ein Lesekopf (2) sind und die Bewegung zwischen beiden Elementen (1, 2) linear oder rotierend ist,

wobei die Vorrichtung (4) zum Erzeugen einer Vielzahl von Ausgangssignalen (S1, S2, ..., Sm) und zum Verwenden von mindestens einigen der Ausgangssignale (S1, S2, ..., Sm) konfiguriert ist, um die Relativposition zwischen den zwei zueinander beweglichen Elementen (1, 2) zu ermitteln,

wobei der Lesekopf (2) umfasst

- mindestens einen Lichtemitter (20), der konfiguriert ist, um einen Lichtstrahl auszusenden, der durch die Teilstrichskala (1) hindurchgeht oder darauf reflektiert wird, und
- mindestens eine bestimmte geometrische Anordnung (22') von Fotodetektoren (22), wobei die Fotodetektoren (22) konfiguriert sind, um das Licht zu empfangen, das durch die Teilstrichskala (1) hindurchgeht oder darauf reflektiert wird,

wobei die Teilstrichskala (1) eine Vielzahl regelmäßig verteilter Markierungen umfasst und an einer statischen Halterung befestigt ist, und

wobei jeder Fotodetektor (22) konfiguriert ist, um das durch ihn empfangene Licht in ein elektrisches Signal (I1, ..., In) umzuwandeln,

wobei die Vorrichtung (4) Steuerungsmittel (3) umfasst, die konfiguriert sind

- zum Empfangen der elektrischen Signale (I1, I2, ..., In) und

- zum Erzeugen der Ausgangssignale (S1, S2, ..., Sm) gemäß den elektrischen Signalen (I1, I2, ..., In),

wobei die Ausgangssignale (S1, S2, ..., Sm) ein Referenzsignal (I0) umfassen, mit dem ein Referenzpunkt erhalten wird, und ein erstes Zählsignal (A) und ein zweites Zählsignal (B), die im Wesentlichen um 90° phasenverschoben sind, wobei die Relativbewegung zwischen den beiden Elementen (1, 2) mithilfe der Zählsignale (A, B) in Bezug auf den Bezugspunkt ermittelt wird, wodurch somit die Relativposition zwischen den beiden Elementen (1, 2) ermittelt wird,

**dadurch gekennzeichnet, dass**

die Steuerungsmittel (3) ausgelegt sind, um die Beziehung zwischen den elektrischen Signalen (I1, I2, ..., In) zu konfigurieren, die die Fähigkeit aufweisen, abhängig von den elektrischen Signalen (I1, I2, ..., In) unterschiedliche Funktionen zu erzeugen,

wobei die Steuerungsmittel (3) auch die Fähigkeit aufweisen, eine beliebige der Funktionen einem beliebigen der Ausgangssignale (S1, S2, ..., Sm) zuzuordnen, sodass in Abhängigkeit von den erzeugten Funktionen Ausgangssignale (S1, S2, ..., Sm) mit unterschiedlichen Eigenschaften erzeugt werden können, und

wobei die Steuerungsmittel (3) ausgelegt sind, um jedes der elektrischen Signale (I1, I2, ..., In) zu verwenden, um mehrere Ausgangssignale (S1, S2, ..., Sm) zu erzeugen, wobei Ausgangssignale (S1, S2, S3) gemäß der Gleichung $S_j = f_j$ (I1, I2, ..., In) erhalten werden, wobei j = 1, 2, ..., m.

2. System nach Anspruch 1, wobei die Steuerungsmittel (3) konfiguriert sind, um jedem der elektrischen Signale (I1, I2, ..., In), die sie empfangen, eine Verstärkung (G11, ..., Gmn), unterschiedliche Abmessungen der Fotodetektoren (22), die gemäß dem Wert der Verstärkungen (G11, ..., Gmn) simuliert werden, und unterschiedliche Anordnungen (22') der Fotodetektoren (22) zuzuordnen, die gemäß dem Wert der Verstärkungen (G11, ..., Gmn) und der konfigurierten Kombination der elektrischen Signale (I1, I2, ..., In) simuliert werden können.

3. System nach Anspruch 2, wobei die Werte der Verstärkungen (G11, ..., Gmn) programmierbar sind.

4. System nach einem der Ansprüche 1 bis 3, wobei die durch die Steuerungsmittel (3) erzeugten Funktionen lineare Funktionen sind.

5. System nach einem der Ansprüche 1 bis 4, wobei die Fotodetektoren (22) und die Steuerungsmittel (3) in ein einziges Halbleitersubstrat integriert sind.

6. System nach einem der Ansprüche 1 bis 5, wobei die Anordnung (22') der Fotodetektoren (22) eindimensional ist.

7. System nach einem der Ansprüche 1 bis 5, wobei die Anordnung (22') der Fotodetektoren (22) zweidimensional ist.

8. System nach einem der Ansprüche 1 bis 7, wobei alle Fotodetektoren (22) eine im Wesentlichen gleiche Größe und eine im Wesentlichen gleiche Form aufweisen.

**Revendications**

1. Système comprenant un dispositif optoélectronique configurable et deux éléments (1, 2) mobiles l'un par rapport à l'autre, lesdits éléments (1, 2) étant une échelle graduée (1) et une tête de lecture (2) et le mouvement entre les deux éléments (1, 2) étant linéaire ou rotatif,

le dispositif (4) étant configuré pour produire une pluralité de signaux de sortie (S1, S2, ..., Sm) et pour utiliser au moins certains desdits signaux de sortie (S1, S2, ..., Sm) pour déterminer la position relative entre lesdits deux éléments (1, 2) mobiles l'un par rapport à l'autre,

la tête de lecture (2) comprenant

- au moins une source de lumière (20), conçue pour émettre un faisceau de lumière qui traverse l'échelle graduée (1) ou qui est réfléchie dessus et
- au moins un agencement géométrique spécifique (22') de photodétecteurs (22), lesdits photodétecteurs (22) étant conçus pour recevoir la lumière qui traverse ou qui est réfléchie sur ladite échelle graduée (1),

l'échelle graduée (1) comprenant une pluralité de marques réparties périodiquement et fixées sur un support statique et

chaque photodétecteur (22) étant conçu pour convertir la lumière qu'il reçoit en un signal électrique (I1, ..., In),

ledit dispositif (4) comprenant des moyens de commande (3) conçus

- pour recevoir lesdits signaux électriques (I1, I2, ..., In) et
- pour produire les signaux de sortie (S1, S2, ..., Sm) conformément auxdits signaux électriques (I1, I2, ..., In),

lesdits signaux de sortie (S1, S2, ..., Sm) comprenant un signal de référence (I0), qui permet d'obtenir un point de référence, et un premier signal de comptage (A) et un second signal de comptage (B), sensiblement déphasés à 90° l'un par rapport à l'autre, le mouvement relatif des deux éléments (1, 2) étant détecté au moyen desdits signaux de comptage (A, B), par rapport audit point de référence, la position relative entre lesdits deux éléments (1, 2) étant ainsi déterminée, **car actérisé en ce que**
lesdits moyens de commande (3) sont adaptés pour configurer la relation entre lesdits signaux électriques (I1, I2, ..., In), ayant la capacité de générer différentes fonctions en fonction desdits signaux électriques (I1, I2, ..., In), lesdits moyens de commande (3) ayant également la capacité d'associer n'importe laquelle desdites fonctions à n'importe lequel des signaux de sortie (S1, S2, ..., Sm), de sorte que, en fonction des fonctions générées, des signaux de sortie (S1, S2, ..., Sm) présentant différentes caractéristiques puissent être produits, et
lesdits moyens de commande (3) étant adaptés pour utiliser chacun desdits signaux électriques (I1, I2, ..., In) pour produire plusieurs signaux de sortie (S1, S2, ..., Sm), des signaux de sortie (S1, S2, S3) selon l'équation $S_j = f_j$ (I1, I2, ..., In) étant obtenus, j = 1, 2, ..., m.

2. Système selon la revendication 1, dans lequel les moyens de commande (3) sont conçus pour associer un gain (G11, ..., Gmn) à chacun des signaux électriques (I1, I2, ..., In) qu'il reçoit, différentes dimensions des photodétecteurs (22) étant simulées en fonction de la valeur desdits gains (G11, ..., Gmn), et différents agencements (22') desdits photodétecteurs (22) pouvant être simulés en fonction de la valeur desdits gains (G11, ..., Gmn) et la combinaison configurée entre les signaux électriques (I1, I2, ..., In).

3. Système selon la revendication 2, dans lequel les valeurs des gains (G11, ..., Gmn) sont programmables.

4. Système selon l'une quelconque des revendications 1 à 3, dans lequel les fonctions générées par les moyens de commande (3) sont des fonctions linéaires.

5. Système selon l'une quelconque des revendications 1 à 4, dans lequel les photodétecteurs (22) et les moyens de commande (3) sont intégrés dans un seul substrat semi-conducteur.

6. Système selon l'une quelconque des revendications 1 à 5, dans lequel l'agencement (22 ') des photodétecteurs (22) est unidimensionnel.

7. Système selon l'une quelconque des revendications 1 à 5, dans lequel l'agencement (22 ') des photodétecteurs (22) est bidimensionnel.

8. Système selon l'une quelconque des revendications 1 à 7, dans lequel tous les photodétecteurs (22) ont une taille sensiblement égale et une forme sensiblement égale.

**Fig. 1**

**Fig. 2**

**Fig. 3**

**Fig. 4**

**Fig. 5**

**EP 1 914 525 B1**

**REFERENCES CITED IN THE DESCRIPTION**

**Patent documents cited in the description**

- EP 250711 B1
- EP 1164359 B1
- EP 1147376 B1
- EP 1308700 A2